Europäisches Patentamt

European Patent Office

Office européen des brevets

(19)

(11) Publication number: **0 029 596**
**A1**

(12) # EUROPEAN PATENT APPLICATION

(21) Application number: 80107270.3

(22) Date of filing: 21.11.80

(51) Int. Cl.³: **C 09 D 3/81**
**C 09 D 3/80, C 08 L 33/06**

(30) Priority: 21.11.79 US 96281
05.05.80 US 146267

(43) Date of publication of application:
03.06.81 Bulletin 81/22

(84) Designated Contracting States:
BE CH DE FR GB IT LI NL SE

(71) Applicant: E.I. DU PONT DE NEMOURS AND COMPANY
Legal Department 1007 Market Street
Wilmington, Delaware 19898(US)

(72) Inventor: Chang, David Chi-Kung
945 Stephen Highway
Troy Michigan 48084(US)

(74) Representative: Abitz, Walter, Dr.-Ing. et al,
Abitz, Morf, Gritschneder P.O. Box 86 01 09
D-8000 München 86(DE)

(54) An improved high solids coating composition of a low molecular weight acrylic polymer and a nitrogen resin cross-linking agent, and a substrate coated therewith.

(57) The improved high solids coating composition contains at least 50% by weight of a binder of film-forming constituents in which the constituents are of

(A) an acrylic polymer that has a number average molecular weight of about 500-10,000 and preferably 500-4,500, a hydroxyl content of at least 2% by weight, a glass transition temperature of about -20°C to +20°C and contains about 2-10% by weight of a chain transfer agent, and is of
    an alkyl methacrylate,
    a hydroxyalkyl acrylate or
    a hydroxyalkyl methacrylate,
    and optionally, an alkyl
    acrylate or styrene and
(B) an alkylated melamine formaldehyde cross-linking agent;

the improvement used with this composition is the addition of select ultraviolet light stabilizers and optionally, antioxidants. The composition is particularly useful for clear coat/color coat exterior finishes for automobiles, trucks and airplanes.

EP 0 029 596 A1

1

FF-7625-A          TITLE

"An Improved High Solids Coating Composition
Of A Low Molecular Weight Acrylic Polymer And
A Nitrogen Resin Cross-Linking Agent, And A
Substrate Coated Therewith"

BACKGROUND OF THE INVENTION

This invention is related to high solids coating compositions, in particular, to an improved high solids acrylic coating compositions.

Acrylic coating compositions that are cross-linked with melamine resins are well known in the art as shown by Vasta U.S. Patent 3,622,651, issued November 23, 1971; Hick U.S. Patent 3,841,895, issued October 15, 1974; Parker U.S. Patent 3,674,734, issued July 4, 1972 and Parker U.S. Patent 3,637,546, issued January 25, 1972. These patents illustrate high quality coating compositions. However, these compositions have a relatively high solvent content to provide for good application properties and good properties of the resulting dried finish. To utilize these compositions in areas which have strict air pollution regulations, pollution abatement equipment is required. This equipment is expensive and increases capital investment of a plant and is costly to operate. Any attempt to reduce the solvent content of these compositions generally results in finishes which have either a poor appearance or unacceptable properties or both.

It has been found that these acrylic coating compositions provide an excellent appearance along with depth of color and metallic glamour when a clear or transparent coat of the compositions is applied over a conventional colored or pigmented coat. However, the weatherability and durability of these clear coats have been found

2

to be poor since checking, cracking and flaking of the clear coat occur after relatively short periods of exposure to outdoor weathering, giving the automobile or truck an unsightly appearance. Refinishing of these weathered clear coats is difficult and expensive since the clear coat must be sanded to remove cracked and flaked clear coat before a refinish coat can be applied.

There is great need for an acrylic coating composition that has a low solvent content and that can be utilized without pollution abatement equipment but still provides a high quality finish that is resistant to outdoor weathering which is useful as an exterior finish for automobiles, trucks, and airplanes and as a clear coat/color coat finish. The high solids coating composition of this invention has these desirable characteristics.

SUMMARY OF THE INVENTION

The improved high solids coating composition comprises at least 50% by weight of a binder of film-forming constituents and up to 50% by weight of a nonaqueous liquid carrier; in which the film-forming constituents consist essentially of

(A) about 50-95% by weight of an acrylic polymer having a number average molecular weight determined by gel permeation chromotography of about 500-10,000 and preferably 500-4,500, a hydroxyl content of about 2%-10% by weight, a glass transition temperature of about -20°C to +20°C and contains about 2-10% by weight of a chain transfer agent, and the acrylic polymer consists essentially of

an alkyl methacrylate that has 1-18 carbon atoms in the alkyl group,

3

a hydroxy alkyl acrylate, or a hydroxy alkyl methacrylate each having 2-4 carbon atoms in the alkyl group, and optionally, an alkyl acrylate that has 2-18 carbons in the alkyl group or styrene and

(B) 5-50% by weight of alkylated melamine formaldehyde cross-linking agent having 1-4 carbon atoms in the alkyl group;

the improvement used therewith comprises the inclusion of about 0.1-20% by weight, based on the weight of the binder of the coating composition, of an ultraviolet light stabilizer; optionally, the coating composition contains about 1-20% by weight, based on the weight of the binder, of an ultraviolet light stabilizer and about 0.1-5% by weight, based on the weight of the binder, of an antioxidant.

DESCRIPTION OF THE INVENTION

The high solids coating composition has a binder content of film-forming constituents of at least 50% by weight. Generally, the composition has a binder content of about 60-85%. The remaining constituent in the composition is a liquid carrier which generally is a solvent for the binder. In addition, the composition optionally contains about 0.1-30% by weight, based on the weight of the binder, of pigment.

The improvement used with the high solids coating composition is the addition to the coating composition of about 0.1-20% by weight, based on the weight of the binder, of an ultraviolet light stabilizer. Optionally, the composition can contain about 1-20% by weight, based on the weight of the binder, of an ultraviolet light stabilizer and about 0.1-5% by weight, based on the weight of the binder, of an antioxidant; preferably, the weight ratio of ultraviolet light stabilizer to an antioxidant is about 1:1 to about 50:1.

The binder of film-forming constituents used in the coating composition comprise about 50-95% by weight of an acrylic polymer and 5-50% by weight of an alkylated melamine formaldehyde cross-linking agent. For most uses, the composition contains about 65-75% by weight of the acrylic polymer and 25-35% by weight of an alkylated melamine formaldehyde cross-linking agent.

The acrylic polymer utilized in the coating composition is prepared by solution polymerization in which the monomers are blended with a solvent, polymerization catalyst and chain transfer agent and heated to about 75-150°C for 2-6 hours to form a polymer that has a number average molecular weight of about 500-10,000 and preferably about 500-4,500, a hydroxyl content of 2-10% by weight and a glass transition temperature of about -20°C to +20°C. Generally, acrylic polymers having a number average molecular weight of about 1,000-3,500 are preferred and used in the composition. Generally, it has been found that to provide a coating composition with good application characteristics, acrylic polymers are used having a glass transition temperature that is lower than the glass transition temperatures of polymers used in conventional acrylic enamels.

To form films that have acceptable physical properties from low molecular weight acrylic polymers, the polymers must have a hydroxyl content that is about two to three times higher than acrylic polymers used for conventional thermosetting compositions. The higher hydroxyl content provides additional cross-linking sites and films are formed that have excellent physical properties that are equivalent to and often better than films formed from conventional thermosetting acrylic compositions.

Both the above number average molecular weight and the weight average molecular weight (mentioned hereinafter) are determined by gel permeation chromatography.

The glass transition temperature of the polymer is determined by differential scanning colorimetry or is calculated.

One technique that is successfully used in preparing the low molecular weight acrylic polymers is a programmed addition of monomers, solvents, catalyst solution, and chain transfer agent into a polymerization vessel at a given rate. These programmed additions can be manually calculated or calculated by a computer. This allows for the polymerization of low molecular weight acrylic polymers which are then terminated with the chain transfer agent at the desired low molecular weight.

Typical solvents which are used to prepare the acrylic polymer are the following: toluene, ethyl acetate, acetone, methyl isobutyl ketone, methyl ethyl ketone, ethyl alcohol, and other aliphatic, cycloaliphatic and aromatic hydrocarbon, esters, ethers, ketones and alcohols which are conventionally used.

About 0.1-4% by weight, based on the weight of the monomers, of the polymerization catalyst is used to prepare the acrylic polymer. Typical catalysts are: azobisisobutyronitrile, azo-bis-($\alpha$, $\gamma$-dimethyl-valeronitrile), benzoyl peroxide, $\underline{t}$-butyl pivalate and the like.

Typical chain transfer agents are 2-mercaptoethanol dodecyl mercaptan, benzene thioethanol, mercapto- succinic acid, butyl mercaptan, mercaptopropionic acid and the like. A sufficient amount of a transfer agent is used to provide the resulting acrylic polymer with about 2-10% by weight of a chain-transfer agent.

The acrylic polymer used in the high solids coating composition is of an alkyl methacrylate that has 1-18 carbon atoms in the alkyl group, and an alkyl acrylate that has 2-18 carbon atoms in the alkyl group and a hydroxyalkyl acrylate or a hydroxyalkyl methacrylate each having 2-4 carbon atoms in the alkyl group. To form an acrylic polymer which has a hydroxyl content of about 2-10% by weight, a sufficient amount of the aforementioned hydroxyalkyl acrylate or methacrylate is utilized. The polymer also can contain small amounts of $\alpha,\beta$-ethylenically unsaturated carboxylic acid, such as acrylic acid, methacrylic acid, itaconic acid, in amounts of about 0.1-5% by weight.

Typical alkyl methacrylates and acrylates that can be used to prepared the acrylic polymer are: methyl methacrylate, ethyl methacrylate, butyl methacrylate, hexyl methacrylate, 2-ethylhexyl methacrylate, nonyl methacrylate, lauryl methacrylate, stearyl methacrylate, cyclohexyl methacrylate, isodecyl methacrylate, propyl methacrylate, phenyl methacrylate, isobornyl methacrylate, ethyl acrylate, propyl acrylate, isopropyl acrylate, butyl acrylate, isobutyl acrylate, hexyl acrylate, 2-ethylhexyl acrylate, nonyl acrylate, lauryl acrylate, stearyl acrylate, cyclohexyl acrylate, isodecyl acrylate, propyl acrylate, phenyl acrylate, isobornyl acrylate and the like.

Adhesion promoting monomers can also be used in the acrylic polymer such as diethyl aminoethyl methacrylate, t-butyl aminoethyl methacrylate, 3-(2-methacryloxyethyl)-2,2-spirocyclohexyl oxazolidene and the like.

Typical hydroxyalkyl acrylates and methacrylates which can be used to prepare the acrylic polymer are: 2-hydroxyethyl acrylate, 2-hydroxypropyl acrylate, 2-hydroxybutyl acrylate, 2-hydroxyethyl methacrylate, 2-hydroxypropyl methacrylate, 2-hydroxy butyl methacrylate, and the like.

The acrylic polymer can contain about 0.1-30% by weight of other constituents such as styrene or substituted styrene, such as methyl styrene, acrylonitrile, methacrylonitrile, acrylamide and methacrylamide.

One useful acrylic polymer is of 15-82% by weight of an alkyl methacrylate that has 1-4 carbon atoms in the alkyl group, 2-50% by weight of an alkyl acrylate that has 2-12 carbon atoms in the alkyl group and 16-35% by weight of a hydroxyalkyl acrylate or a hydroxyalkyl methacrylate each having 2-4 carbon atoms in the alkyl group.

One particularly useful acrylic polymer of the aforementioned type is of about 60-80% by weight of methyl methacrylate, 2-10% by weight of 2-ethylhexyl acrylate, and 18-30% by weight of hydroxyethyl acrylate. An example of one useful acrylic polymer of the aforementioned type is of 71% by weight of methyl methacrylate, 4% by weight of 2-ethylhexyl acrylate, and 25% by weight of hydroxyethyl acrylate.

The following are examples of other useful acrylic polymer: 25-65% by weight of methyl methacrylate, 15-40% by weight of butyl acrylate, 20-35% by weight of hydroxyethyl acrylate; 50% by weight of methyl methacrylate, 20% by weight of butyl acrylate
and 30% by weight of hydroxyethyl acrylate; 35%
by weight of methyl methacrylate, 35% by weight of
butyl acrylate and 30% by weight of hydroxyethylacrylate; 30% methyl methacrylate, 38% butyl acrylate
and 32% hydroxyethyl acrylate; 6% methyl methacrylate,
64% ethylhexyl methacrylate, 30% hydroxyethyl
acrylate; 36% methyl methacrylate, 34% lauryl methacrylate, 30% hydroxyethyl acrylate; and 10% methyl
methacrylate, 60% butyl methacrylate and 30% hydroxyethyl acrylate.

One particularly useful polymer contains
about 5-15% by weight styrene, 10-20% by weight methyl
methacrylate, 33-43% by weight butyl acrylate, 27-
37% by weight hydroxyethyl acrylate and 0.1-3% by
weight of acrylic acid. One preferred acrylic polymer
of the above type contains 15% styrene, 14.8% methyl
methacrylate, 38% butyl acrylate, 32% hydroxyethyl
acrylate and 0.2% acrylic acid.

Optionally, in addititon to the above film-
forming constituents, about 1-10% by weight, based
on the weight of the film-forming constituents of
the composition of cellulose acetate butyrate can
be used in the composition. Cellulose acetate butyrate
that has a butyryl content of about 25-60% by weight
and a viscosity of about 0.01-2 seconds measured
according to ASTM-D-1343-56 at 25°C. can be utilized.

Also, in addition to the above film-forming
constituents, plasticizers in the amounts of 0.1-10%
by weight, based on the weight of the film-forming
constituents, can be used in the composition.
Plasticizers that can be used are, for example, butyl
benzyl phthalate, dibutyl phthalate, triphenyl
phosphate, 2-ethylhexylbenzyl phthalate, dicyclohexyl
phthalate, diallyl phthalate, dibenzyl phthalate, butylcyclohexyl phthalate, mixed benzoic acid and · fatty oil acid esters of pentaerythritol, poly ene adipate)dibenzoate, diethylene glycol dibenzoate, tetrabutylthiodisuccinate, butylphthalylbutyl glycolate, acetyltributyl citrate, dibenzylsebacate, tricresyl phosphate, toluene ethyl sulfonamide, and dimethylene cyclohexyl phthalate.

The composition can contain in addition from about 0.5-15% by weight, based on the weight of the composition, of a polyhydroxy functional compound which is a solvent for the film-forming constituents and reduces the application viscosity of the composition and will be cross-linked into a resulting finish prepared from the composition. Typical polyhydroxy functional compounds that are useful are trimethylol ethane, trimethylol proprane, trimethylol butane, trimethyl pentanediol, pentaerythritol, pentanediol, diethylene glycol, dipropylene glycol, triethylene glycol, 2-ethyl-1,3-hexanediol tripropylene glycol, butanediol and the like. Low molecular weight hydroxyl terminated polyesters can be used such as a polyester of trimethyl pentanediol and isophthalic acid, a polyester of trimethyl pentanediol and a mixture of dimethyl aliphatic carboxylates.

The alkylated melamine formaldehyde resin used in the composition generally has 1-4 carbon atoms in the alkyl group. The resin is prepared by conventional techniques in which an alcohol such as methanol, ethanol, propanol, isopropanol, butanol, isobutanol, t-butanol and the like is reacted with a melamine formaldehyde resin. The resin can be monomeric or polymeric. One perferred resin which gives a high quality finish is hexamethoxymethyl melamine. Another useful resin is a methoxy/butylmethyl melamine.

One useful composition contains as the film forming binder contains about 60-70% by weight, based on the weight of the binder, of an acrylic polymer of 5-15% by weight styrene, 10-20% by weight methyl methacrylate, 33-43% by weight butyl acrylate, 27-38% by weight hydroxyethyl acrylate and 0.1-3% by weight acrylic acid and 30-40% by weight, based on the weight of the binder of methoxy/butoxymethyl melamine.

As mentioned before, the composition can contain pigments. These pigments can be introduced into the composition by first forming a mill base with the acrylic polymer utilized in the composition of with other compatible polymers by conventional techniques, such as sand-grinding, ball milling, attritor grinding, two roll milling to disperse the pigments. The mill base is blended with the film-forming constituents as shown in the following Example.

Any of the conventional pigments used in the coating compositions can be utilized in this composition. Examples of typical pigments that can be used are as follows: metallic oxide (such as titanium dioxide), zinc oxide, iron oxide and the like, metal hydroxide, metal flakes (such as aluminum flake), chromates ( such as lead chromate), sulfides, sulfates carbonates, carbon black, silica, talc, china clay, phthalocyanine blues and greens, organo reds, organo maroons and other organic dyes.

Typical ultraviolet light stabilizers that are useful in the coating compositions are as follows:

Benzophenones such as hydroxydodecycloxy-benzophenone, 2,4-dihydroxybenzophenone, hydroxybenzophenones containing sulfonic acid groups, 2,4-dihydroxy-3',5'-di-t-butylbenzophenone, 2,2',4'-trihydroxybenzophenone esters of dicarboxylic acids, 2-hydroxy-4-acryloxyethoxybenzophenone, aliphatic monoesters of 2,2',4-trihydroxy-4'-alkoxybenzophenone, 2-hydroxy-4-methoxy-2'-carboxybenzophenone;

Triazoles such as 2-phenyl-4-(2'-4'-dihydroxybenzoyl)triazoles, substituted benzotriazoles such as hydroxyphenyltriazoles such as 2-(2'-hydroxy-5'-methylphenyl)benzotriazole, 2-(2'-hydroxyphenyl)benzotriazole, 2-(2'-hydroxy-5'-octylphenyl)naphthotriazole;

Triazines such as 3,5-dialkyl-4-hydroxyphenyl derivatives of triazine, sulfur-containing derivatives of dialkyl-4-hydroxyphenyltriazines, hydroxyphenyl-1,3,5-triazines and such triazines containing sulfonic acid groups, aryl-1,3,5-triazines, orthohydroxyaryl-s-triazine;

Benzoates such as dibenzoate of diphenylolpropane, t-butyl benzoate of diphenylolpropane, nonyl phenyl benzoate, octyl phenyl benzoate, resorcinol dibenzoate.

Other ultraviolet light stabilizers that can be used include lower alkyl thiomethylene-containing phenols, substituted benzenes such as 1,3-bis(2'-hydroxybenzoyl)benzene, metal derivatives of 3,5,-di-t-butyl-4-hydroxyphenylpropionic acid, asymmetrical oxalic acid diarylamides, alkylhydroxyphenylthioalkanoic acid esters, dialkylhydroxyphenylalkanoic acid esters of di- and tri- pentaerythritol, phenyl- and naphthlene-substituted oxalic acid diamides, methyl-$\beta$-(3,5-di-t-butyl-4-hydroxyphenyl)propionate, $\lambda$,$\lambda$'-bis(2-hydroxy-phenyl)diisopropylbenzene, 3,5'-dibromo-2'-hydroxyacetophenone, ester derivatives of 4,4-bis(4'-hydroxyphenyl)pentanoic acid wherein there is at least one unsubstituted position ortho to the aromatic hydroxyl groups, organophosphorus sulfides such as bis(diphenyl-phosphinothioyl)monosulfide and bis(diphenylphosphino-thioyl)disulfide, 4-benzoyl-6-(dialkylhydroxybenzyl) resorcinol, bis(3-hydroxy-4-benzoylphenoxy)diphenylsilane, bis(3-hydroxy-4-benzoylphenoxy)dialkylsilane, 1,8-naphthalimides, $\gamma$-cyano-$\beta$,$\beta$-diphenylacrylic acid derivatives, bis(2-benzoxazolyl)alkanes, bis(2-napthoxa-zolyl)alkanes, methylene malonitriles containing aryl and heterocyclic substitutes, alkylenebis(dithio)carbamate, 4-benzoyl-3-hydroxyphenoxyethyl acrylate, 4-benzoyl-3-hydroxyphenoxyethyl methacrylate, aryl- or alkyl-substituted acrylonitriles, 3-methyl-5-isopropylphenyl-6-hydroxycoumarone.

Particularly useful ultraviolet light stabilizers that can be used are hindered amines of bipiperidyl derivatives such as those disclosed in Murayama et al., U.S. Patent 4,061,616, issued December 6, 1977, column 2, line 65, through column 4, line 2, and nickel com-pounds such as /1-phenyl-3-methyl-4-decanoylpyrazolate (5)7-Ni, bis/phenyldithiocarbamato7-Ni(II), and others listed in the above patent, column 8, line 44 through line 55.

Typical antioxidants are as follows: tetrakis-alkylene dialkylhydroxyaryl alkyl ester alkanes such as tetrakismethylene-3-(3',5'-dibutyl-4'-hydroxyphenyl) propionate methane, the reaction product of p-aminodi-phenylamine and glycidyl methacrylate, the reaction product of n-hexyl-N'-phenyl-p-phenylene diamine and glycidyl methacrylate, pentaerythritol tetrakis(thioglycolate), trimethylolpropane tris(thioglycolate), trimethylolethane tris(thioglycolate), N-(4-anilino-phenyl)acrylamide, N-(4-anilinophenol)maleamic acid, N-(4-anilinophenyl)maleimide, alkylhydroxyphenyl groups bonded through carboalkoxy linkages to the nitrogen atom of a heterocyclic nucleus containing an imidocarbonyl group or an imidodithiocarbonyl group, 3,5-di-t-butyl-4-hydroxycinnamonitrile, ethyl-3,5-di-t-hexyl-4-hydroxy-cinnamate, substituted benzyl esters of β-substituted hydroxyphenylpropionic acids, bis(hydroxyphenylalkylene) alkyl isocyanurate compounds, tetrakishydroxybenzylphosphonium halides alone or in combination with a dialkyl-thiodialkanoate, thiodimethylidyne tetrakisphenols alone or in combination with a dialkyl thiodialkanoate or phosphite or phosphonate, dihydrocarbylhydroxyphenylaryl or -alkyl phosphonites or phosphonates or phosphates or phosphites or phosphinates or phosphinites or phosphoro-thionates or phosphinothionates, diphenylbis(3,5-di-t-butyl-4-hydroxyphenoxy)silane, hydrocarbylhydroxy-phenyldihydrocarbyldithiocarbamates such as 3,5-di-t-butyl-4-hydroxyphenyldimethyldithiocarbamate and amino-benzylthioether.

One preferred combination of ultraviolet light stabilizer and antioxidant is 2-hydroxy-4-dodecyloxy-benzophenone or a substituted 2(2'-hydroxyphenyl)benzotriazole and tetrakismethylene-3(3',5'-dibutyl-4'-hydroxyphenyl)propionate methane.

An acid catalyst solution can be added to the composition to increase the rate of cross-linking of the composition on curing. Generally, about 0.1-2% by weight, based on the weight of the film-forming constituents, of acid catalyst is used. For example, phosphoric acid or an alkyl acid phosphate in which the alkyl groups has 1-12 carbon atoms can be utilized for this purpose. Typical alkyl acid phosphates are methyl acid phosphate, ethyl acid phosphate, propyl acid phosphate, lauryl acid phosphate, and the like. Sulfonic acid or a substituted sulfonic acid can be used such as para-toluene sulfonic acid.

14

Adducts of the aforementioned acids also can be used as catalysts. For example, epoxy resins reacted with phosphoric acid or an alkyl acid phosphate or with a substituted sulfonic acid such as paratoluene sulfonic acid are useful. Typical epoxy resins that can be used to form these adducts are "Epon" 828, 1001, 1002, 1003, 1004, which are the condensation products of epichlorohydrin and bisphenol A. Other compounds can be used to form adducts of these acids such as alkyl oxazolidine, e.g., dimethyl oxazolidine.

The coating composition of this invention can be applied over a variety of substrates, such as metal, wood, glass, plastics, and the like, by any of the conventional application methods, such as spraying electrostatic spraying, dipping, brushing, flow-coating and the like. The viscosity of the composition can be adjusted for any of these methods by adding solvents if necessary. Generally, the composition is utilized at a high solids content which keeps air pollution at a minimum level.

The coatings are baked at relatively low temperatures of about 65-140°C. for about 15 minutes-2 hours. The resulting coating is about 0.1-5 mils thick but for most uses, a 1-3 mil thick coating is used. One technique that is used to insure that there will be no popping or cratering of the coating is to allow the solvents to flash off for about 15-30 seconds before a second coating is sprayed on or otherwise applied, then waiting from about 2-10 minutes before baking the coating toa llow any residual solvents to flash off. The resulting coatings has good gloss and can be rubbed or polished with conventioanl techniques to improve the smoothness or appearance or gloss or both. The coating has good adhesion to substrates of all types, is hard and resistant to weathering, solvents, alkali, scratches and the like. These characteristics make the composition particularly useful as a finish for automobiles, trucks, airplanes, railroad equipment and for the repair of trucks and automobiles. The composition can also be used on appliances, vending machines, outdoor equipment such as bridges, water tanks, gas tanks and the like.

One particular use for the composition is that it can be used to repair powder coating finishes, in particular powder coating finishes which are pigmented with flake pigments, such as aluminum flake pigments. Excellent matches between the finish from the powder coating and the finish of the novel composition are achieved which makes the composition particularly useful as a repair composition.

When the coating composition is used as clear coat/color coat finish for substrates in which the color coat contains an ultraviolet light stabilizer, it is believed that ultraviolet light stabilizer migrates from the color coat into the clear coat and provides ultraviolet light stabilizer to the clear coat for protection against weathering. Preferably, both the clear coat and the color coat contain ultraviolet light stabilizer and as stabilizer is lost from the clear coat due to weathering, it is replenished from the color coat. The color coat provides a reservoir for the ultraviolet light stabilizer for the clear coat and maintains the stabilizer at an effective level that provides protection from weathering. Applicant does not wish to be held to the above theory.

As pointed out above, the color coat can contain an antioxidant which also migrates to the clear coat. The antioxidant can also be used in the clear coat. .

Preferred, to form a durable finish, about 5-8% by weight of the ultraviolet light stabilizer is used along with about 0.1-1% by weight of the antioxidant and the ratio of ultraviolet light stabilizer to antioxidant is about 10:1.

In a color coat/clear coat finish, the thickness of the fully cured color coat and clear coat can vary. Generally, the color coat is about 0.4-1.5 mils thick and preferably 0.6-1.0 mils thick and the clear coat is about 0.5-6.0 mils thick and preferably 0.8-1.5 mils thick.

The color coat contains pigment in a pigment to binder weight ratio of about 1/100 to about 150/100. Any of the conventional pigments used in coating compositions including metallic flake pigments can be used.

The clear coat can also contain transparent pigments, i.e., pigments having the same or similar refractive index as the binder of the clear coat and are of a small particle size of about 0.015-50 microns. Typical pigments that can be used in a pigment to binder weight ratio of about 1/100 to 10/100 are inorganic siliceous pigments, such as silica pigments. These pigments have a refractive index of about 1.4-1.6.

The clear coat/color coat finish can be applied to all types of substrates such as primed or unprimed metal, plastic, rubber, flexible ethylenepropylene copolymer rubbers, flexible polyurethanes, fiberglass reinforced with polyester resins and the like by conventional spraying techniques and preferably the clear coat is applied to the color coat while the color coat is still wet. Other conventional application techniques as mentioned above can also be used. Under some circumstances it may be desirable to apply the clear coat as a powder to a wet color coat and then to form a finish by baking.

Two particularly useful additives for both the color coat and the clear coat are iron pyrophosphate and finely divided silica. Up to about 10% by weight and generally about 0.1-10% by weight based on the weight of the binder, of iron pyrophosphate can be used. Up to about 15% by weight, and generally about 0.5-15% by weight, based on the weight of the binder, of finely divided silica can be used. Iron pyrophosphate and the silica improve the overall durability and performance of the finish of this invention.

In particular, iron pyrophosphate is a useful additive which provides a synergistic effect with the ultraviolet light stabilizer and antioxidant. Compositions containing the above three constituents have a surprisingly longer period of outdoor weatherability before failure occurs. The longer period is more than the cumulative effect that would be expected of the combination of the three constituents.

The following examples illustrate the invention. All parts and percentages are on a weight basis unless other wise specified.

<u>EXAMPLE 1</u>

The following constituents are blended together to form a paint A (control):

| Portion 1 | Parts By Weight |
|---|---|
| Acrylic resin solution (83% solids of a polymer of methyl methacrylate, butyl acrylate, hydroxy ethyl acrylate in a weight ratio of 30/38/32 having a weight average molecular weight of about 3000 and a glass transition temperature of 263°K and a hydroxyl content of about 5.5 in methyl ethyl ketone) | 341.7 |

| Portion 2 | |
|---|---|
| Blue mill base(470.4 parts of above acrylic resin solution, 13.45 parts of a polymeric dispersant, 80 parts of "Monastral" Red pigment, 36.15 parts of ethylene glycol monobutyl ether acetate) | 143.5 |
| Red mill base(472.26 parts of the above acrylic resin solution, 11.24 parts of a polymeric dispersant, 80 parts of "Monastral" Red quinacridon type pigment, ethylene glycol monobutyl ether acetate) | 29.3 |
| Aluminum flake mill base (193.2 parts of a 39.32% solids aluminum flake in mineral spirits, 366.0 parts acrylic resin solution described above, 40.8 parts :ol ethylene glycol monoethyl ether acetate) | 126.4 |
| Black mill base(226.5 parts of the above acrylic resin solution, 16.6 parts of a polymeric dispersant, 40.0 parts of carbon black pigment, 16.9 parts of ethylene glycol monobutyl ether acetate) | 60.0 |
| White mill base(3078 parts of ethylene glycol monobutyl ether acetate, 2676 parts acrylic resin solution described above, 246.0 parts polymeric dispersant, 12000 parts of titanium dioxide pigment) | 271.3 |

Portion 3

| | |
|---|---|
| Hexamethoxy methylolmelamine resin | 296.0 |
| Methyl ethyl ketone | 208.9 |
| Ethylene glycol monobutyl ether acetate | 157.6 |
| | 1634.7 |

Portion 1 is charged into a mixing vessel and then Portion 2 is added and mixed and then Portion 3 is added and mixed to form Paint A.

Paint A is reduced to a spray viscosity of about 107 centipoises measured on a Brookfield viscometer at room temperature:

| | Parts By Weight |
|---|---|
| Paint A (prepared above) | 163.47 |
| PTSA solution (20% solution of paratoluene sulfonic acid in methanol) | 1.50 |
| Acetone | 1.50 |
| Ethylene glycol monoethyl ether acetate/ethylene glycol monobutyl ether acetate mixture 70/30 weight ratio | 10.00 |
| Total | 166.47 |

Paint B is prepared by blending together the following constituents:

| | Parts By Weight |
|---|---|
| Paint A (prepared above) | 163.47 |
| Ultraviolet light stabilizer solution [20% solution of 2(2'-hydroxy phenyl) benzotriazole in methyl ethyl ketone] | 13.50 |
| Antioxidant solution [20% solution of tetrakismethylene 3(3',5'-dibutyl-4'-hydroxy phenyl) propionate methane] | 1.50 |
| PTSA solution (described above) | 1.50 |
| Total | 179.97 |

The resulting paint is at a spray viscosity of 86 centipoises measured as above.

A clear coat is prepared by blending the following constituents:

| | |
|---|---|
| Acrylic resin solution (described above) | 84.82 |
| Hexamethoxy methylol melamine resin | 29.60 |
| Silicone resin solution | 0.06 |
| Methyl ethyl ketone | 1.74 |
| Ethylene glycol monobutyl acetate | 37.70 |
| PTSA solution (described above) | 2.00 |
| Total | 155.92 |

The resulting clear coat has a spray viscosity of 68 centipoises measured as above.

Above Paint A which was reduced to a spraying viscosity and Paint B are each sprayed onto three separate sets of four phosphatized steel panels per set and allowed to air dry for 15 minutes and then baked for 10 minutes at 65°C. to form a coating about 1.1 mils thick. The above clear coat is then applied to each of the above painted panels and air dried for 15 minutes, baked for 10 minutes at 65°C to form a clear coat about 0.8-1.0 mils thick.

A set of the above panels of Paint A and a set of the above panels of Paint B are exposed to 6 months weathering in Florida. Another set of the above panels of Paint A and another set of the panels of Paint B are exposed to 767 hours of acceleraed weathering in a weathering device (AWC) and a third pair of sets of the above panels of Paints A and B are exposed to a Q.U.V. "Weather-O-Meter" for 631 hours. The percent gloss retention measured at 20° was determined for each of the panels and then averaged after exposure. The results of the above tests are as follows:

|  | 6 mos. Florida | 767 hrs. AWC | 631 hrs. Q.U.V. |
|---|---|---|---|
| Clear Coat/ Paint A (control) | 84.5 | 96.9 | 82.8 |
| Clear Coat/ Paint B (containing U.V. stabilizer and Antioxidant) | 89.4 | 99.6 | 97.6 |

% Gloss Retention Measured at 20°

The above data shows that the panels that contained U.V. stabilizer in the color coat (Paint B) have substantially more gloss retention under actual and accelerated weathering conditions in comparison to panels in which the color coat (Paint A) did not contain U.V. stabilizer and antioxidant.

EXAMPLE 2

A silver blue metallic paint (Paint C) is prepared by blending together the following constituents:

| Portion 1 | Parts By Weight |
|---|---|
| Acrylic resin solution (described in Example 1) | 81.24 |

| Portion 2 | |
|---|---|
| Blue mill base (described in Example 1) | 15.06 |
| Red mill base (described in Example 1) | 8.76 |
| Aluminum flake mill base (described in Example 1) | 426.54 |
| White mill base (described in Example 1) | 2.64 |
| "Cab-O-Sil" dispersion (5.5% parts colloidal silica, 88.35 acrylic resin solution described in Example 1, 5.6 parts methyl ethyl ketone, 0.55 parts tri-ethanolamine) | 160.98 |

22

Portion 3

| | Parts |
|---|---|
| Hexamethoxy methylol melamine resin | 177.60 |
| Methyl ethyl ketone | 44.46 |
| Ethylene glycol monobutyl ether acetate | 105.72 |
| Total | 1023.00 |

A sprayable paint is prepared by blending 171.58 parts of paint C with 1.5 parts of a PTSA solution described in Example 1.

Paint D is prepared by blending the following constituents:

| | Parts By Weight |
|---|---|
| Paint C (prepared above) | 171.58 |
| Ultraviolet light stabilizer solution (described in Example 1) | 13.50 |
| Antioxidant solution (described in Example 1) | 1.50 |
| PTSA solution described in Example 1) | 1.50 |
| Total | 188.08 |

A clear coat E is prepared by blending the following constituents:

| | Parts By Weight |
|---|---|
| Clear coat (described in Example 1) | 307.84 |
| Ultraviolet light stabilizer solution (described in Example 1) | 27.00 |
| Antioxidant solution (described in Example 1) | 3.00 |
| Total | 337.84 |

Sprayable Paint C and Paint D are each sprayed onto three separate sets of four phosphatized steel panels per set and dried and baked as in Example 1. The sets of panels coated with Paint C are then sprayed with the clear coat of

22

Example 1 and dried and baked as in Example 1. The sets of panels coated with Paint D are coated with the above prepared clear coat E and dried and baked as in Example 1. The thicknesses of the clear coats and color coats are about the same as in Example 1).

The sets of panels are exposed as in Example 1 and the results are as follows:

| | % Gloss Retention Measured at 20° | | |
| --- | --- | --- | --- |
| | 6 mos. Florida | 767 hrs. AWC | 631 hrs. Q.U.V. |
| Clear Coat/ Paint C (control) | 74.1 | 81.7 | 63.4 |
| Clear Coat and U.V. and Antioxidant/ Paint D and U.V. and Antioxidant | 87.2 | 98.3 | 83.5 |

The above results show that the panels containing U.V. stabilizer and antioxidant in both the clear coat and the color coat (Paint D) have substantially more gloss retention under actual and accelerated weathering conditions in comparison to panels in which neither the color coat (Paint C) or the clear coat contained U.V. stabilizer and anti-oxidant.

24

CLAIMS

1. An improved high solids coating composition comprising at least 50% by weight of a binder of film-forming constituents and up to 50% by weight of a liquid carrier; in which the film-forming constituents consist essentially of

(A) about 50-95% by weight of an acrylic polymer having a number average molecular weight determined by gel permeation chromotography of about 500-10,000, and consisting essentially of

up to 30% by weight of styrene, methyl methacrylate, an alkyl methacrylate or an alkyl acrylate each having 2-12 carbon atoms in the alkyl group and a hydroxyalkyl acrylate or a hydroxyalkyl methacrylate each having 2-4 carbon atoms in the alkyl group; and

(B) about 5-50% by weight of a nitrogen resin crosslinking agent, the improvement uses therewith comprises:

about 0.1-20% by weight, based on the weight of the binder, of an ultraviolet light stabilizer.

2. The coating composition of claim 1 in which the acrylic polymer has a hydroxyl content of about 2-10% by weight, a glass transition temperature of about -20°C to +20°C and contains about 2-10% by weight of a chain transfer agent.

3. The coating composition of claim 2 in which the acrylic polymer consists essentially of

15-82% by weight of methyl methacrylate,

2-50% by weight of an alkyl acrylate having 2-12 carbon atoms in the alkyl group, and

24

16-35% by weight of a hydroxy-alkyl acrylate or a hydroxy-alkyl methacrylate, each having 2-4 carbon atoms in the alkyl group.

4. The coating composition of claim 2 in which the acrylic polymer consists essentially of
5-15% by weight of styrene,
10-20% by weight of methyl methacrylate,
33-43% by weight of butyl acrylate,
27-37% by weight of hydroxyethyl acrylate and
0.1-3% by weight of acrylic acid.

5. The coating composition of any one of claims 1 to 4 containing pigment in addition to the binder in the amount of about 0.1-30% by weight, based on the weight of the binder.

6. A composition according to any one of claims 1 to 5 which contains up to about 10% by weight, based on the weight of the film-forming constituents, of iron pyrophosphate and up to about 15% by weight of finely-divided silica.

7. The coating composition of any one of claims 1 to 6 containing 1-20% by weight, based on the weight of the binder, of an ultraviolet light stabilizer and about 0.1-5% by weight, based on the weight of the binder, of an antioxidant preferably an alkylene (dialkyl-hydroxylaryl)ester alkane; wherein the weight ratio of ultraviolet light stabilizer to antioxidant is 1:1 to about 50:1.

8. The coating composition of claim 7 in which the ultraviolet light stabilizer is a benzophenone or a substituted benzotriazole stabilizer.

9. The coating composition of any one of claims 2 to 8. in which the crosslinking agent is an alkylated melamine formaldehyde resin, preferably hexamethoxymethyl melamine.

10. The coating composition of any one of claims 1 to 9 containing in addition to the film-forming constituents 0.1-2% by weight of an acid catalyst, preferably an alkyl acid phosphate, phosphoric acid, acids or paratoluene sulfonic acid.

11. The coating composition of claim 7 in which the ultraviolet light stabilizer is a 2(2,-hydroxyphenyl)benzotriazole and the antioxidant is tetrakis methylene 3(3',5'-dibutyl-4'-hydroxyphenyl)-propionate methane.

12. A substrate having a finish of a clear coat top layer in firm adherence to a color coat layer in adherence with the substrate; wherein

the clear coat consists essentially of a transparent film-forming binder;

the color coat consists essentially of a film-forming binder of the coating composition of claim 1 containing pigments in a pigment to binder weight ratio of about 1/100 to 150/100; and

the color coat contains about 0.1-20% by weight, based on the weight of the binder, of an ultraviolet light stabilizer.

13. The substrate of claim 12 in which the color coat is about 0.4-1.5 mils thick and the clear coat is about 0.5-5.0 mils thick, and in which preferably both the color coat and the clear coat each contain an ultraviolet light stabilizer.

14. The substrate of claim 12 in which the clear coat is a dried coalesced layer of the composition of claim 7 and the color coat is a dried coalesced layer of the composition of claim 7 containing pigment in addition to the binder of about 0.1-30% by weight, based on the weight of the binder of the color coat.

European Patent Office

**EUROPEAN SEARCH REPORT**

0029596

Application number

EP 80 10 7270

| Category | Citation of document with indication, where appropriate, of relevant passages | Relevant to claim |
|---|---|---|
| | FR - A - 1 551 585 (LAVORAZIONE MATERIE PLASTICHE)<br><br>* abstract * | 1-14 |
| | US - A - 3 522 207 (D.H.A. HAYER et al.)<br><br>* claims * | 1-14 |
| | FR - A - 1 429 032 (AMERICAN CYANAMID)<br><br>* abstract * | 1-14 |
| X | CHEMICAL ABSTRACTS, vol. 81, no. 24, December 16, 1974, page 133, ref. 154716x COLUMBUS, Ohio (US) & JP - A - 74 55 737 (DAINIPPON PRINTING CO. LTD.)(May 30, 1974)<br><br>* the whole abstract * | 1-14 |

## DOCUMENTS CONSIDERED TO BE RELEVANT

### CLASSIFICATION OF THE APPLICATION (Int. Cl.³)

C 09 D 3/81
3/80
C 08 L 33/06

### TECHNICAL FIELDS SEARCHED (Int. Cl.³)

C 09 D 3/81
3/80
C 08 L 33/00
33/02
33/04
33/06
33/08
33/10
33/12
C 09 D 5/32
C 08 K 5/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family,
corresponding document

The present search report has been drawn up for all claims

| Place of search | Date of completion of the search | Examiner |
|---|---|---|
| The Hague | 25-02-1981 | FOUQUIER |

EPO Form 1503.1 06.78